# EUROPEAN PATENT APPLICATION

(11) **EP 4 819 437 A1**
(43) Date of publication of application: **07.10.2026**
(21) Application number: 25907656.0
(22) Date of filing: 19.08.2025
(51) Int. Cl.: H02J 7/00, H01M 10/44, H01M 10/60

(54) **SECONDARY BATTERY CHARGING/DISCHARGING DEVICE AND CONTROL METHOD THEREFOR**

(30) Priority: 20.12.2024 KR 20240192889
(71) Applicant: LG Energy Solution, Ltd., Seoul 07335 (KR)
(72) Inventor: GU, Jaeon, Daejeon 34122 (KR); CHUNG, Changkwon, Daejeon 34122 (KR)
(74) Representative: Goddar, Heinz J.
(86) International application number: PCT/KR2025/012512
(87) International publication number: WO 2026/134518

(57) **Abstract**

A charge/discharge device for a secondary battery according to an embodiment of the present disclosure comprises: a cabinet; a tray that is disposed inside the cabinet and on which a plurality of battery cells are loaded; a fan that is installed on a wall surface of the cabinet and allows air to flow from the outside to the inside of the cabinet; a driving unit that moves the fan so that the positions of the tray and the fan are aligned; and a heat exchange unit that is disposed adjacent to the fan and changes the temperature of air flowing into an interior of the cabinet from the fan.

## Description

### [TECHNICAL FIELD]

### Cross Citation with Related Application(s)

This application claims priority to and the benefit of Korean Patent Application No. 10-2024-0192889, filed on December 20, 2024, the disclosure of which is incorporated herein by reference in its entirety.

The present disclosure relate to a charge/discharge device for a secondary battery and a control method thereof, and more particularly, to a charge/discharge device for a secondary battery that comprises a movable fan and a heat exchange unit, and a control method thereof.

### [BACKGROUND]

In modern society, as portable devices such as a mobile phone, a notebook computer, a camcorder and a digital camera, and energy storage system (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages of being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and an exterior case, i.e., a battery case which seals and accommodates the electrode assembly together with an electrolyte.

In general, depending on the shape of exterior cases, the lithium secondary battery may be classified into a cylindrical secondary battery in which the electrode assembly is incorporated into a cylindrical metal can, and a pouch-type secondary battery in which the electrode assembly is incorporated into in a pouch made of an aluminum laminate sheet. Among these batteries, the cylindrical secondary battery has advantages in that the cylindrical battery has relatively large capacity and is structurally stable.

On the other hand, the secondary battery may evaluate performance and detect defects through a charging/discharging process after the assembly step. In this case, the charging/discharging process of the secondary battery can be carried out through a charging/discharging device that includes a probe pin to which current and voltage are applied. The charge/discharge device for a secondary battery may include a cabinet formed with an internal space, and the interior space of the cabinet can be configured such that trays on which a plurality of battery cells are stacked can be disposed in a plurality of layers.

In the charging/discharging process of a secondary battery, heat can be generated due to various factors, such as contact resistance between the probe pins and the battery cells. In order to cool the generated heat, a fan can be used to flow air over the battery cells. However, if the tray position varies depending on the height of the battery cells, air cannot be smoothly transferred from the fan to the battery cells, so that the battery cells cannot be effectively cooled. In addition, there is a problem that temperature deviations occur between battery cells, thereby causing a decrease in battery cell performance. Therefore, there is a need for charging/discharging structures that can effectively cool battery cells, improve temperature deviations between battery cells, and prevent a decrease in performance of battery cells.

### [DETAILED DESCRIPTION OF THE INVENTION[]

### [Technical Problem]

An object of the present disclosure is to configure a fan included in a secondary battery charge/discharge device so as to be movable, and dispose a heat exchange unit at the outlet of the fan to effectively cool the battery cells and improve temperature deviations between battery cells, thereby preventing a decrease in performance of battery cells.

However, the technical objects to be solved by embodiments of the present disclosure are not limited to the above-described objects, and can be variously expanded within the scope of the technical idea included in the present disclosure.

### [Technical Solution]

In an illustrative aspect of the present disclosure, provided is a charge/discharge device for a secondary battery, comprising: a cabinet; a tray that is disposed inside the cabinet and on which a plurality of battery cells are loaded; a fan that is installed on a wall surface of the cabinet and allows air to flow from the outside to the inside of the cabinet; a driving unit that moves the fan so that the positions of the tray and the fan are aligned; and a heat exchange unit that is disposed adjacent to the fan and changes the temperature of air flowing into an interior of the cabinet from the fan.

In an embodiment, the tray and the fan may be provided in plural numbers, the plurality of trays may be disposed in a plurality of layers along the height direction of the cabinet, and the plurality of fans may be installed on a side wall of the cabinet and are movable along the height direction of the cabinet.

In an embodiment, based on a direction directed from an inlet to an outlet of each of the plurality of fans, each of the plurality of fans may be positionally aligned with each of the plurality of trays.

In an embodiment, the cabinet may be formed with a plurality of support plates disposed in a plurality of layers, and each of the plurality of trays may be seated on each of the plurality of support plates.

In an embodiment, a door may be formed on at least a part of the side wall of the cabinet, and the plurality of fans may be installed on the door.

In an embodiment, the charge/discharge device for a secondary battery may further comprise a position sensor that detects the positions of the tray and the fan; and a sensing unit including at least one temperature sensor that measures the temperature of air flowing into the fan from the outside of the cabinet.

In an embodiment, the position sensor may detect the positions of the tray and the fan along the height direction of the cabinet.

In an embodiment, the charge/discharge device for a secondary battery may further comprise a control unit that controls at least one of the driving unit and the heat exchange unit based on the information acquired by the sensing unit.

In an embodiment, the control unit may control the driving unit so that the fan moves along the height direction of the cabinet when the positions of the tray and the fan are not aligned along the direction directed from the inlet to the outlet of the fan, thereby aligning the positions of the tray and the fan.

In an embodiment, the control unit may compare the temperature measured by the temperature sensor with a set value, control the heat exchange unit so that air flowing into an interior of the cabinet from the fan is heated, if the temperature measured by the temperature sensor is lower than the set value, and control the heat exchange unit so that air flowing into an interior of the cabinet from the fan is cooled, if the temperature measured by the temperature sensor is higher than the set value.

In an embodiment, the tray may comprise a lower plate on which the plurality of battery cells are seated; a side surface plate that covers the side surfaces of the plurality of battery cells; and a flow hole formed in the side surface plate.

In an embodiment, the driving unit may move the fan so that the fan is positionally aligned with the flow hole.

In an embodiment, heat exchange unit is movable by the driving unit so as to be located adjacent to the outlet of the fan.

In an embodiment, the heat exchange unit may comprise a thermocouple.

In an embodiment, the plurality of battery cells may be formed in a circular cylindrical shape, and the plurality of battery cells may be loaded on the tray along a direction perpendicular to the height direction of the cabinet.

In another illustrative aspect of the present disclosure, provided is a control method of a charge/discharge device for a secondary battery, comprising: a loading step of loading a plurality of battery cells on trays disposed inside a cabinet; a position detection step of detecting the positions of a fan and the trays that allows air to flow from the outside to the inside of the cabinet; a position alignment step of moving the fan to align the positions of the tray and the fan; a temperature measurement step of measuring the temperature of air flowing into the fan from the outside of the cabinet; and a temperature adjustment step of adjusting the temperature of air flowing into an interior of the cabinet from the fan by using a heat exchange unit installed adjacent to the fan.

In an embodiment, the position detection step may be detecting the positions of the tray and the fan along the height direction of the cabinet, and the position alignment step may be moving the fan in the height direction of the cabinet so that the positions of the tray and the fan are aligned along the direction directed from the inlet to the outlet of the fan.

In an embodiment, the temperature adjustment step may be: heating the air flowing into an interior of the cabinet from the fan by using the heat exchange unit, if the temperature measured in the temperature measurement step is lower than a set value, and cooling the air flowing into an interior of the cabinet from the fan by using the heat exchange unit, if the temperature measured in the temperature measurement step is higher than a set value.

### [Advantageous Effects]

According to specific embodiments of the present disclosure, since the fan is configured to be movable and the heat exchange unit is disposed at the outlet of the fan, it is possible to effectively cool the battery cells, and improve the temperature deviation not only between battery cells disposed on one tray but also between battery cells disposed on different layers, thereby preventing a decrease in performance of battery cells.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view of a secondary battery charge/discharge device according to an embodiment of the present disclosure.
FIG. 2 is a cross-sectional view taken along line II-II' of FIG. 1.
FIG. 3 is an enlarged view of section A of FIG. 2.
FIG. 4 is a diagram showing the structure of a tray disposed on a support plate of a cabinet according to an embodiment of the present disclosure.
FIG. 5 is a diagram showing an example of a heat exchange unit according to an embodiment of the present disclosure.
FIG. 6 is a block diagram showing the control structure of a secondary battery charge/discharge device according to an embodiment of the present disclosure.
FIG. 7 is a diagram showing the operating state of a secondary battery charge/discharge device according to an embodiment of the present disclosure.
FIG. 8 is a diagram showing the operating state of a secondary battery charge/discharge device according to a comparative example of the present disclosure.
FIG. 9 is a diagram showing the results of an airflow simulation when the positions of the fan and tray are aligned according to an embodiment of the present disclosure.
FIG. 10 is a diagram showing the results of an airflow simulation when the positions of the fan and tray are not aligned according to a comparative example.
FIG. 11 is a flowchart of a control method of a secondary battery charge/discharge device according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Meanwhile, although terms representing directions such as upward, downward, left, right, forward, and backward are used in the present embodiment, it would be obvious to those skilled in the art that these terms are only for convenience of explanation and may vary depending on the location of the target object or the location of the observer.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

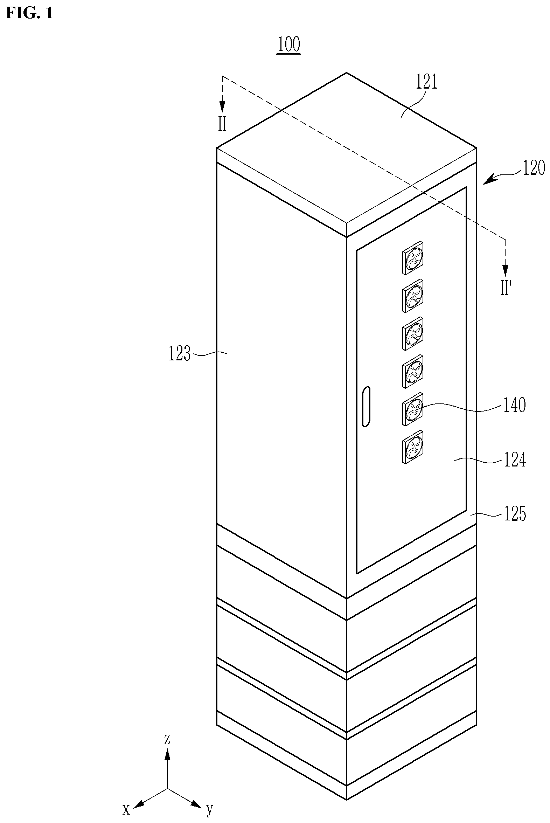

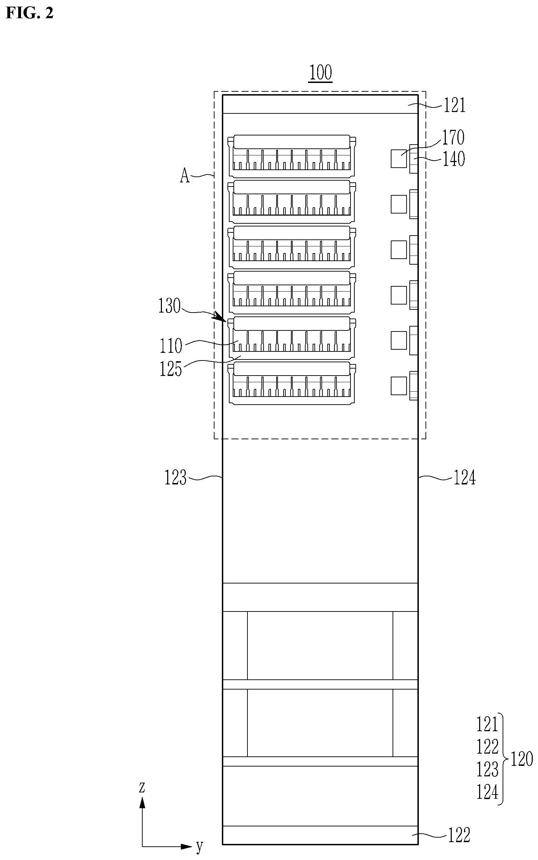

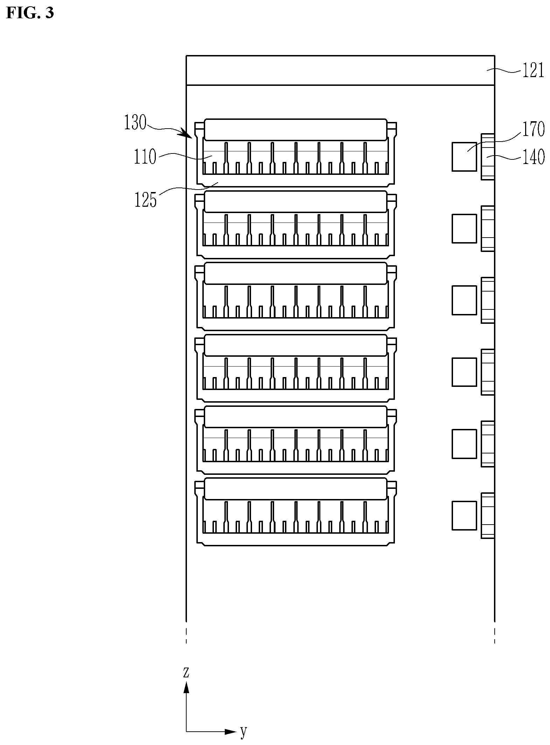

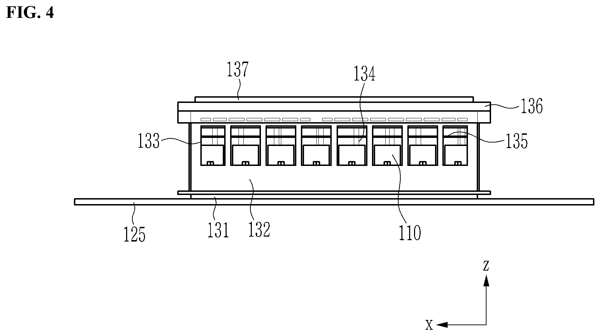

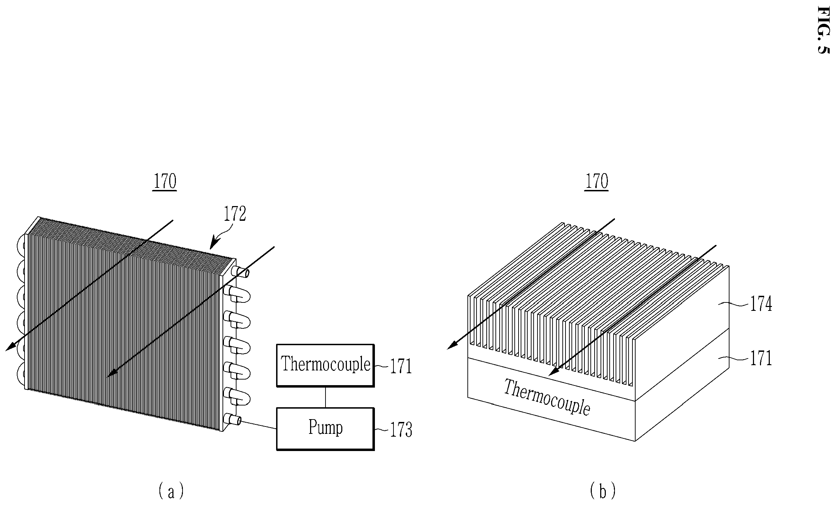

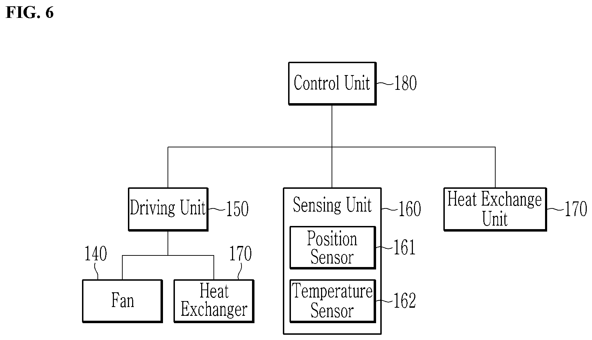

FIG. 1 is a perspective view of a secondary battery charge/discharge device 100 according to an embodiment of the present disclosure. FIG. 2 is a cross-sectional view taken along line II-II' of FIG. 1. FIG. 3 is an enlarged view of section A of FIG. 2. FIG. 4 is a diagram showing the structure of a tray 130 disposed on a support plate 125 of a cabinet 120 according to an embodiment of the present disclosure. FIG. 5 is a diagram showing an example of a heat exchange unit 170 according to an embodiment of the present disclosure. FIG. 6 is a block diagram showing the control structure of a secondary battery charge/discharge device 100 according to an embodiment of the present disclosure.

Referring to FIGS. 1 to 6, a secondary battery charge/discharge device 100 according to an embodiment of the present disclosure may include a cabinet 120, a tray 130 on which battery cells 110 are loaded, a fan 140 that allows air to flow from the outside to the inside of the cabinet 120, a driving unit 150 that moves the fan 140, a sensing unit 160 including a plurality of sensors 161, 162, a heat exchange unit 170 that changes the temperature of air flowing through a fan 140, and a control unit 180 that controls the driving unit 150 and the heat exchange unit 170.

The cabinet 120 may include a lower wall 122, an upper wall 121, a side wall 123, and a door 124. The cabinet 120 may have a rectangular parallelepiped shape that extends long along one direction (e.g., the z-axis direction of FIG. 1). The door 124 may be formed on at least a part of any one of the side walls 123 of the cabinet 120. The cabinet 120 may include an internal space defined by the upper wall 121, the lower wall 122, the side wall 123, and the door 124. A tray 130 loaded with battery cells 110 and a heat exchange unit 170 may be disposed in the internal space of the cabinet 120. A support plate 125 for supporting the tray 130 may be formed inside the cabinet 120. The support plate 125 may be fixedly formed on a side wall 123 of the cabinet 120. The support plate 125 may be provided in plural numbers. The plurality of support plates 125 may be disposed in a plurality of layers along the height direction of the cabinet 120. Here, the height direction of the cabinet 120 is a direction from the lower wall 122 of the cabinet 120 toward the upper wall 121, which refers to the z-axis direction in the drawings. A tray 130 may be seated on the support plate 125. A fan 140 may be installed on the wall surfaces 121, 122, 123 of the cabinet 120. A fan 140 may be installed on the side wall 123 of the cabinet 120. As described above, a door 124 may be formed on the side wall 123 of the cabinet 120, and in this case, the fan 140 may be installed on the door 124 of the cabinet 120. A driving unit 150 may be installed on the wall surfaces 121, 122, 123 of the cabinet 120. A driving unit 150 may be installed on the side wall 123 of the cabinet 120. As described above, a door 124 may be formed on the side wall 123 of the cabinet 120, and in this case, the driving unit 150 may be installed on the door 124 of the cabinet 120.

The tray 130 may be disposed inside the cabinet 120. The tray 130 may be seated on a support plate 125 of the cabinet 120. The trays 130 may be provided in plural numbers. The plurality of trays 130 may be disposed in a plurality of layers along the height direction of the cabinet 120. The plurality of trays 130 may be seated on each of the plurality of support plates 125 disposed in a plurality of layers along the height direction of the cabinet 120. The battery cells 110 may be loaded on the tray 130. A plurality of battery cells 110 may be stacked on one tray 130. The tray 130 may include a lower plate 131 and a side surface plate 132. The battery cells 110 may be seated on the lower plate 131 of the tray 130 so as to be in contact with one side of the battery cell 110. The battery cell 110 may be seated on the lower plate 131 of the tray 130 so as to be in contact with the lower side of the battery cell 110. A side surface plate 132 of the tray 130 may cover the side surface of the battery cell 110. The lower side and side surfaces of the battery cells 110 may be surrounded by the lower plate 131 and side surface plates 132 of the tray 130. A flow hole 133 may be formed in the side surface plate 132 of the tray 130. The flow hole 133 may have a configuration that extends long along a direction perpendicular to the height direction of the cabinet 120 (the x-axis direction and the y-axis direction in the drawing). The air that flows from the outside to the inside of cabinet 120 by the fan 140 may pass through the flow holes 133 to be transmitted to the battery cells 110 loaded on the tray 130.

Meanwhile, referring to FIG. 4, for charging and discharging the battery cell 110, the upper part of the tray 130 may include a pin plate 135 having a probe pin 134 formed thereon, a sealing member 136 disposed on the upper part of the pin plate 135, and a printed circuit board 137 disposed on the upper part of the sealing member 136. The probe pin 134 may be electrically connected to the printed circuit board 137, and the probe pin 134 may be connected to the upper side of the battery cell 110 so that the battery cell 110 can be charged and discharged.

The battery cell 110 may be formed into a circular cylindrical shape. The battery cells 110 may be provided in plural numbers. A plurality of battery cells 110 may be loaded on a tray 130. The battery cells 110 may be seated on the lower plate 131 of the tray 130 so that one side is in contact with the lower plate 131. The battery cells 110 may be seated on the lower plate 131 of the tray 130 so that its lower side is in contact with the lower plate 131. The side surface of the battery cell 110 seated on the lower plate 131 of the tray 130 may be covered by the side surface plate 132 of the tray 130. A probe pin 134 may be connected to the other side of the battery cell 110. A probe pin 134 may be connected to the upper side of the battery cell 110. On one tray 130, a plurality of battery cells 110 may be loaded along a direction perpendicular to the height direction of the cabinet 120 (x-axis and y-axis directions in the drawing).

A fan 140 may be installed in the cabinet 120 to flow air from the outside to the inside of the cabinet 120. The fan 140 may be installed on at least one of the wall surfaces 121, 122, 123 of the cabinet 120. The fan 140 may be installed on the side wall 123 of the cabinet 120. A door 124 may be formed on the side wall 123 of the cabinet 120, and in this case, as shown in FIGS. 1 to 3, the fan 140 may be installed on the door 124 of the cabinet 120. The fan 140 may also be provided in plural numbers. The plurality of fans 140 may be arranged along the height direction of the cabinet 120 on the side wall 123 of the cabinet 120. The number of fans 140 may be the same as the number of trays 130. For example, as shown in FIG. 2, if six support plates 125 are formed in the cabinet 120 and six trays 130 are seated on each of the support plates 125, the number of fans 140 may be six. The fan 140 may flow air from the outside to the inside of the cabinet 120 and transmit the air in a direction toward the tray 130. The fan 140 may be moved by the driving unit 150. The fan 140 may move along the height direction of the cabinet 120 on the side wall 123 of the cabinet 120.

The fan 140 may be positionally aligned with the tray 130. The fan 140 may be positionally aligned with the flow hole 133 formed in the side surface plate 132 of the tray 130. More specifically, the fan 140 may be positionally aligned with the flow hole 133 along the direction directed from the inlet to the outlet (the -y-axis direction in the drawing), and transmit air to the flow hole 133 at the same level (height) as the flow hole 133. Here, the inlet and outlet of the fan 140 refer to the inlet and outlet of the fan 140 based on the direction from the outside to the inside of the cabinet 120. That is, the inlet of the fan 140 refers to the outside of the cabinet 120 adjacent to the fan 140, and the outlet of the fan 140 refers to the inside of the cabinet 120 adjacent to the fan 140. As the fan 140 is positionally aligned with the flow hole 133 of the tray 130, air is smoothly transmitted to the battery cells 110 loaded on the tray 130, thereby effectively cooling the battery cells 110 and preventing a decrease in performance of the battery cells 110 due to temperature deviations between the battery cells 110.

The driving unit 150 may be installed in the cabinet 120. The driving unit 150 may be installed on the wall surfaces 121, 122, 123 of the cabinet 120. The driving unit 150 may be installed on the side wall 123 of the cabinet 120. If a door 124 is formed on the side wall 123 of the cabinet 120, the driving unit 150 may be installed on the door 124 of the cabinet 120. The driving unit 150 may be connected to the fan 140 to move the fan 140. The driving unit 150 may move the fan 140 along the height direction of the cabinet 120 on the side wall 123 of the cabinet 120. The driving unit 150 may include a motor that provides power and a power transmission structure, such as a shaft or belt, that is connected to the fan 140. The driving unit 150 may be controlled by the control unit 180. Additionally, the driving unit 150 may be connected to the heat exchange unit 170 to move the heat exchange unit 170. In this case, the driving unit 150 may move the heat exchange unit 170 so that the heat exchange unit 170 is located adjacent to the outlet of the fan 140.

The sensing unit 160 may include a position sensor 161 that detects the positions of the tray 130 and the fan 140. The sensing unit 160 may include a temperature sensor 162 that measures the temperature of air flowing into the fan 140 from the outside of the cabinet 120 and/or air flowing into the cabinet 120 from the fan 140. The sensing unit 160 may transmit the acquired information to the control unit 180.

The position sensors 161 may be provided in plural numbers. The plurality of position sensors 161 may be provided on the tray 130 and the fan 140. The position sensors 161 may detect the positions of the tray 130 and the fan 140. The position sensor 161 may detect the positions of the tray 130 and the fan 140 along the height direction of the cabinet 120.

The temperature sensors 162 may be provided in plural numbers. The plurality of temperature sensors 162 may be installed adjacent to the inlet and/or outlet of the fan 140. The temperature sensor 162 may measure the temperature of air flowing into the fan 140 from the outside of the cabinet 120. The temperature sensor 162 may measure the temperature of air flowing into the cabinet 120 from the fan 140.

The heat exchange unit 170 may be disposed adjacent to the fan 140. The heat exchange unit 170 may be installed to be located adjacent to the outlet of the fan 140. The heat exchange unit 170 may change the temperature of air flowing into the cabinet 120 from the fan 140. The heat exchange unit 170 may include a thermocouple 171. For example, as shown in FIG. 5(a), the heat exchange unit 170 may have a structure in which a coolant heated or cooled by a thermoelectric element 171 circulates through a heat exchanger 172 via a pump 173. At this time, air flowing into the cabinet 120 by the fan 140 may be heated or cooled by passing through the heat exchanger 172. Additionally, as shown in FIG. 5 (b), the heat exchange unit 170 may have a structure in which the thermocouple 171 is in direct contact with a plurality of heat exchange fins 174 to heat or cool the heat exchange fins 174. At this time, air flowing into the cabinet 120 by the fan 140 may be heated or cooled by passing through the heat exchange fins 174. However, the structure of the heat exchange unit 170 is not limited thereto.

The heat exchange unit 170 may be provided in plural numbers. The plurality of heat exchange unit 170 may be installed adjacent to the outlet of each of the plurality of fans 140. The heat exchange unit 170 may be moved by the driving unit 150. The heat exchange unit 170 may be moved by the driving unit 150 to be located adjacent to the outlet of the fan 140. The heat exchange unit 170 may be moved by the driving unit 150 to be located at the same level (height) as the fan 140 along the height direction of the cabinet 120. The heat exchange unit 170 may be controlled by the control unit 180.

The control unit 180 may control the driving unit 150 and the heat exchange unit 170. The control unit 180 may control the driving unit 150 and the heat exchange unit 170 based on information transmitted from the sensing unit 160.

The control unit 180 may control the driving unit 150 so that the tray 130 and the fan 140 are aligned based on the information transmitted from the position sensor 161. Specifically, the position sensor 161 can detect the positions of the tray 130 and the fan 140 along the height direction of the cabinet 120. The position sensor 161 may transmit the acquired information to the control unit 180. Based on the information transmitted from the position sensor 161, the control unit 180 may determine whether the positions of the tray 130 and the fan 140 along the height direction of the cabinet 120 are the same. In other words, the control unit 180 may determine whether the fan 140 and the tray 130 are located at the same level as each other in the height direction of the cabinet 120 and the positions of the fan 140 and the tray 130 are aligned. If it is determined that the positions of the fan 140 and the tray 130 are not aligned, the control unit 180 may control the driving unit 150 to move the fan 140, thereby aligning the positions of the fan 140 and the tray 130. At this time, the control unit 180 may control the driving unit 150 so that the fan 140 is positionally aligned with the flow hole 133 of the tray 130. Thereby, air flowing into the cabinet 120 by the fan 140 may pass through the flow holes 133 of the tray 130 to be smoothly transmitted to the battery cells 110.

The control unit 180 may control the heat exchange unit 170 based on information transmitted from the temperature sensor 162. Specifically, the temperature sensor 162 may measure the temperature of air flowing into the fan 140 from the outside of the cabinet 120. The temperature sensor 162 may transmit the measured information to the control unit 180. The control unit 180 may compare the air temperature measured by the temperature sensor 162 with a set value. If the air temperature measured by the temperature sensor 162 is lower than a preset value, the control unit 180 may control the heat exchange unit 170 so that the air flowing into an interior of the cabinet 120 from the fan 140 is heated. Conversely, if the air temperature measured by the temperature sensor 162 is higher than a preset value, the control unit 180 may control the heat exchange unit 170 so that the air flowing into an interior of the cabinet 120 from the fan 140 is cooled. Thereby, the temperature deviation of air flowing into an interior of the cabinet 120 from each of the plurality of fans 140 arranged along the height direction of the cabinet 120 can be reduced, and as a result, the temperature deviation between the battery cells 110 stacked on the trays 130 arranged in a plurality of layers may be minimized, thereby preventing a decrease in performance of the battery cells 110.

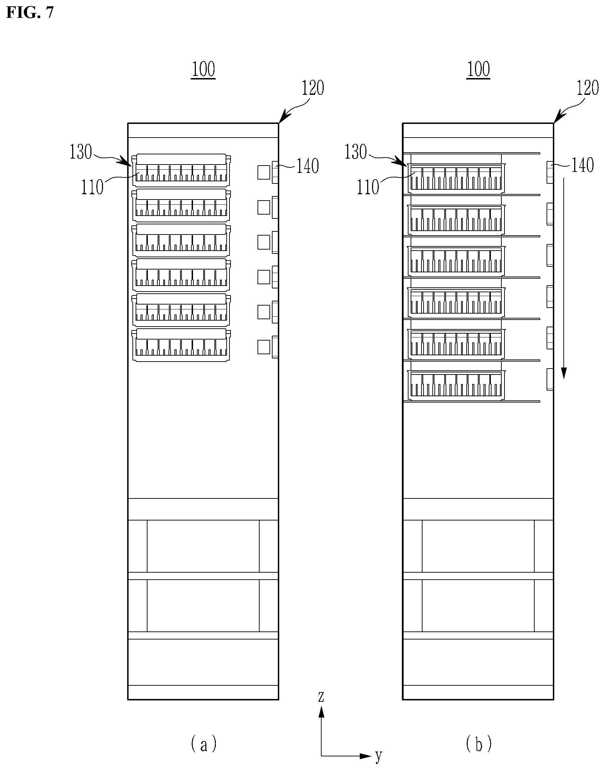

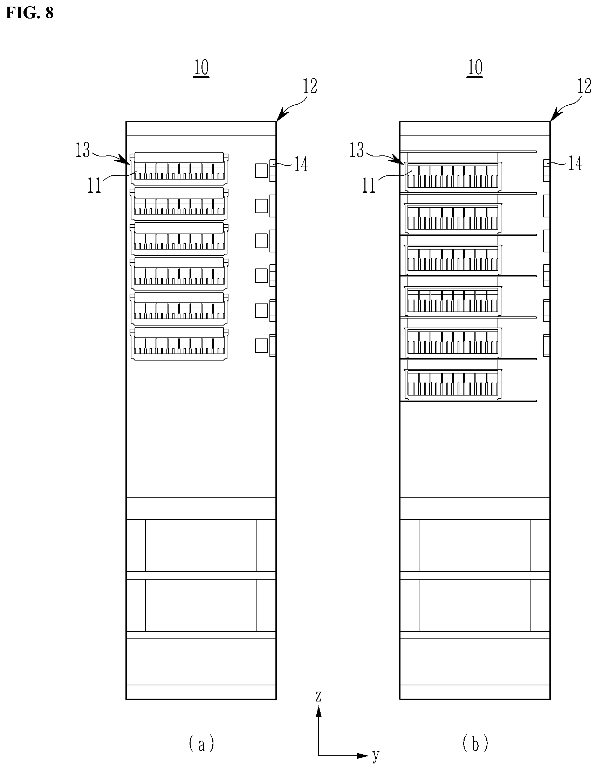

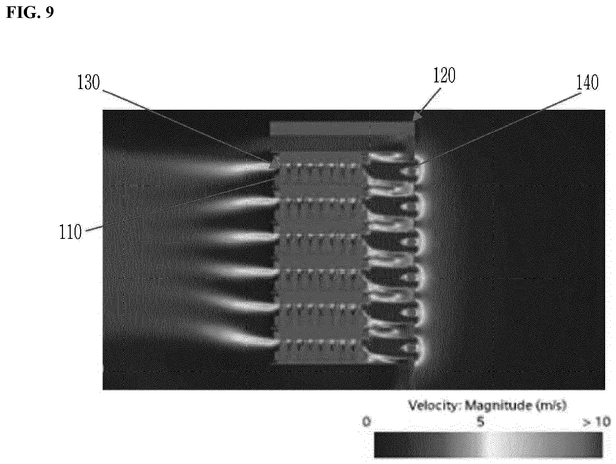

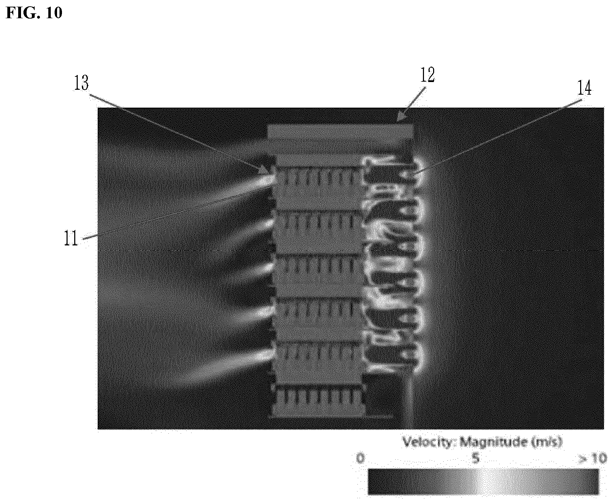

FIG. 7 is a diagram showing the operating state of a secondary battery charge/discharge device 100 according to an embodiment of the present disclosure. FIG. 8 is a diagram showing the operating state of a secondary battery charge/discharge device 10 according to a comparative example of the present disclosure. FIG. 9 is a diagram showing the results of an airflow simulation when the positions of the fan 140 and tray 130 are aligned according to an embodiment of the present disclosure. FIG. 10 is a diagram showing the results of an airflow simulation when the positions of the fan 14 and tray 13 are not aligned according to a comparative example.

The operation principle and effects of a secondary battery charge/discharge device 100 according to an embodiment of the present disclosure will now be described with reference to FIGS. 7 to 10.

First, referring to FIG. 7, in the case of the secondary battery charge/discharge device 100 according to an embodiment of the present disclosure, the fan 140 may be moved by the driving unit 150 to positionally align with the tray 130 not only in the initial state in which the positions of the tray 130 and fan 140 are set to be aligned (see FIG. 7(a)), but also in cases where the position of the tray 130 varies depending on the height of the battery cell 110, etc. (see FIG. 7(b)).

On the other hand, referring to FIG. 8, the charge/discharge device 10 according to the comparative example may also be in a state where the positions of the tray 13 and fan 14 are aligned in the initial state (see FIG. 8(a)). However, in the charge/discharge device 10 of the comparative example, the position of the fan 14 is fixed, and therefore, if the position of the tray 13 changes due to factors such as the height of the battery cells 11 (see FIG. 8(b)), the tray 13 and fan 14 cannot be re-aligned. As a result, air flows under a state where the positions of tray 13 and the fan 14 are misaligned.

In this regard, referring to FIG. 9, when the positions of the fan 140 and the tray 130 are aligned according to an embodiment of the present disclosure, it can be confirmed that the air flowing into the cabinet 120 by the fan 140 flows smoothly through the tray 130.

On the other hand, referring to FIG. 10, if the position of the tray 13 varies depending on factors such as the height of the battery cell 11 and the positions of the tray 13 and the fan 14 are not aligned, as in the comparative example, it can be confirmed that air flowing in by the fan 14 does not pass smoothly through the tray 13 and flows relatively unstably.

As a result, if the positions of the tray 13 and the fan 14 are not aligned, as in the comparative example, the air flowing in from the fan 14 does not flow smoothly through the tray 13. On the other hand, even in case where the position of the tray 130 varies depending on the height of the battery cells 110 as in the present disclosure, if the positions of the tray 130 and fan 140 are aligned, the air flowing in from the fan 140 may flow smoothly through the tray 130. Therefore, it is possible to effectively cool the battery cells 110, minimize temperature deviations between the battery cells 110 and prevent a decrease in performance of the battery cells 110.

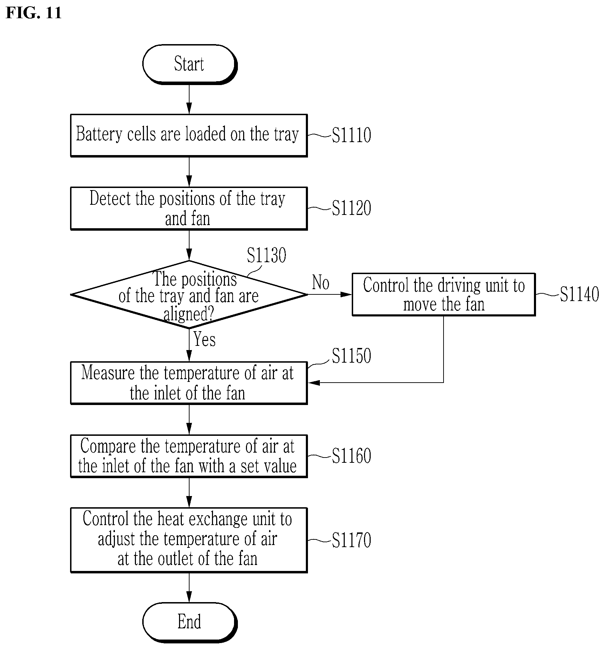

FIG. 11 is a flowchart of a control method of a secondary battery charge/discharge device 100 according to another embodiment of the present disclosure.

Referring to FIG. 11, battery cells 110 may be loaded on a tray 130 disposed inside a cabinet 120 (S1110). The cabinet 120 may be formed with a plurality of support plates 125 arranged in a plurality of layers along the height direction of the cabinet 120. A tray 130 may be seated on each support plate 125. A plurality of battery cells 110 may be loaded on each tray 130.

The sensing unit 160 may detect the positions of the tray 130 and the fan 140 (S1120). The sensing unit 160 may include a plurality of position sensors 161. The position sensors 161 may be installed on the tray 130 and the fan 140 to detect the positions of the tray 130 and the fan 140. The position sensor 161 can detect the positions of the tray 130 and the fan 140 along the height direction of the cabinet 120.

The control unit 180 may determine whether the positions of the tray 130 and the fan 140 are aligned (S1130). Based on the information acquired by the position sensor 161, the control unit 180 may determine whether the positions of the tray 130 and the fan 140 are aligned. The control unit 180 may determine whether the positions of the tray 130 and the fan 140 along the height direction of the cabinet 120 are the same. That is, the control unit 180 can determine whether the tray 130 and the fan 140 are located at the same level (height) along the height direction of the cabinet 120. The control unit 180 may determine whether the positions of the flow hole 133 of the tray 130 and the fan 140 are aligned.

If it is determined that the positions of the tray 130 and the fan 140 are not aligned, the control unit 180 may control the driving unit 150 to move the fan 140 (S1140). The control unit 180 may use the driving unit 150 to move the fan 140 along the height direction of the cabinet 120. The control unit 180 may control the driving unit 150 so that the positions of the tray 130 and the fan 140 are aligned. The control unit 180 may control the driving unit 150 so that the tray 130 and the fan 140 are located at the same level (height).

The sensing unit 160 may measure the temperature of air at the inlet of the fan 140 (S1150). The sensing unit 160 may measure the temperature of air flowing into the fan 140 from the outside of the cabinet 120. The sensing unit 160 may include a temperature sensor 162. The temperature sensor 162 may be installed adjacent to the inlet of the fan 140. The temperature sensor 162 can measure the temperature of air flowing into the fan 140 from the outside of the cabinet 120.

The control unit 180 may compare the temperature of air at the inlet of the fan 140 with a set value (S1160). The control unit 180 may compare the temperature of air measured by the temperature sensor 162 with a set value. The control unit 180 may compare the temperature of air flowing into the fan 140 from the outside of the cabinet 120 with a set value.

The control unit 180 may control the heat exchange unit 170 to adjust the temperature of air at the outlet of the fan 140 (S1170) The control unit 180 may adjust the temperature of air flowing into an interior of the cabinet 120 from the fan 140 by using the heat exchange unit 170 installed adjacent to the outlet of the fan 140. Specifically, if the temperature of air at the inlet of the fan 140 measured by the temperature sensor 162 is lower than a set value, the control unit 180 may control the heat exchange unit 170 so that air at the outlet of the fan 140 is heated. Conversely, if the temperature of air at the inlet of the fan 140 measured by the temperature sensor 162 is higher than a preset value, the control unit 180 may control the heat exchange unit 70 so that air at the outlet of the fan 140 is cooled.

Although the flowchart of the present disclosure describe each step as being executed sequentially, this is merely an illustrative description of the technical concepts of some embodiments of the present disclosure. In other words, a person skilled in the art to which some embodiments of the present disclosure pertains will appreciate that various modifications and variations may be made by changing the steps described in the flowchart or by executing one or more of the steps in parallel without departing from the essential characteristics of some embodiments of the present disclosure, and thus the flowchart is not limited to the time-series order.

As described above, according to the present disclosure, the fan 140 is configured to be movable by the driving unit 150, whereby even if the position of the tray 130 changes, the positions of the fan 140 and the tray 130 may be aligned. Therefore, air is smoothly transmitted from the fan 140 to the tray 130, thereby effectively cooling the battery cells 110 loaded on the tray 130. Additionally, since a heat exchange unit 170 is disposed at the outlet of each fan 140 and thus can adjust the temperature of air flowing into an interior of the cabinet 120 by the fan 140, the temperature deviations between the battery cells 110 stacked on the tray 130 disposed in a plurality of layers may be minimized, thereby preventing a decrease in the performance of the battery cells 110.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: secondary battery charge/discharge device
110: battery cell
120: cabinet
121, 122: upper wall, lower Wall\
123: side wall
124: door
125: support plate
130: tray
131, 132: lower plate, side surface plate
133: flow hole
140: fan
150: driving unit
160: sensing unit
161: position sensor
162: temperature sensor
170: heat exchange unit
171: thermocouple
180: control unit

## Claims

1. A charge/discharge device for a secondary battery, comprising:
a cabinet;
a tray that is disposed inside the cabinet and on which a plurality of battery cells are loaded;
a fan that is installed on a wall surface of the cabinet and allows air to flow from the outside to the inside of the cabinet;
a driving unit that moves the fan so that the positions of the tray and the fan are aligned; and
a heat exchange unit that is disposed adjacent to the fan and changes the temperature of air flowing into an interior of the cabinet from the fan.

2. The charge/discharge device for a secondary battery according to claim 1,
wherein the tray and the fan are provided in plural numbers,
the plurality of trays are disposed in a plurality of layers along the height direction of the cabinet, and
the plurality of fans are installed on a side wall of the cabinet and are movable along the height direction of the cabinet.

3. The charge/discharge device for a secondary battery according to claim 2,
wherein, based on a direction directed from an inlet to an outlet of each of the plurality of fans,
each of the plurality of fans is positionally aligned with each of the plurality of trays.

4. The charge/discharge device for a secondary battery according to claim 3,
wherein the cabinet is formed with a plurality of support plates disposed in a plurality of layers, and
each of the plurality of trays is seated on each of the plurality of support plates.

5. The charge/discharge device for a secondary battery according to claim 2,
wherein a door is formed on at least a part of the side wall of the cabinet, and
the plurality of fans are installed on the door.

6. The charge/discharge device for a secondary battery according to claim 1, further comprising:
a position sensor that detects the positions of the tray and the fan; and
a sensing unit including at least one temperature sensor that measures the temperature of air flowing into the fan from the outside of the cabinet.

7. The charge/discharge device for a secondary battery according to claim 6,
wherein the position sensor detects the positions of the tray and the fan along the height direction of the cabinet.

8. The charge/discharge device for a secondary battery according to claim 7, further comprising:
a control unit that controls at least one of the driving unit and the heat exchange unit based on the information acquired by the sensing unit.

9. The charge/discharge device for a secondary battery according to claim 8,
wherein the control unit controls the driving unit so that the fan moves along the height direction of the cabinet when the positions of the tray and the fan are not aligned along the direction directed from the inlet to the outlet of the fan, thereby aligning the positions of the tray and the fan.

10. The charge/discharge device for a secondary battery according to claim 8,
wherein the control unit,
compares the temperature measured by the temperature sensor with a set value,
controls the heat exchange unit so that air flowing into an interior of the cabinet from the fan is heated, if the temperature measured by the temperature sensor is lower than the set value, and
controls the heat exchange unit so that air flowing into an interior of the cabinet from the fan is cooled, if the temperature measured by the temperature sensor is higher than the set value.

11. The charge/discharge device for a secondary battery according to claim 1,
wherein the tray comprises,
a lower plate on which the plurality of battery cells are seated;
a side surface plate that covers the side surfaces of the plurality of battery cells; and
a flow hole formed in the side surface plate.

12. The charge/discharge device for a secondary battery according to claim 11,
wherein the driving unit moves the fan so that the fan is positionally aligned with the flow hole.

13. The charge/discharge device for a secondary battery according to claim 1,
wherein the heat exchange unit is movable by the driving unit so as to be located adjacent to the outlet of the fan.

14. The charge/discharge device for a secondary battery according to claim 1,
wherein the heat exchange unit comprises a thermocouple.

15. The charge/discharge device for a secondary battery according to claim 1,
wherein the plurality of battery cells are formed in a circular cylindrical shape, and
the plurality of battery cells are loaded on the tray along a direction perpendicular to the height direction of the cabinet.

16. A control method of a charge/discharge device for a secondary battery, comprising:
a loading step of loading a plurality of battery cells on trays disposed inside a cabinet;
a position detection step of detecting the positions of a fan and the trays that allows air to flow from the outside to the inside of the cabinet;
a position alignment step of moving the fan to align the positions of the tray and the fan;
a temperature measurement step of measuring the temperature of air flowing into the fan from the outside of the cabinet; and
a temperature adjustment step of adjusting the temperature of air flowing into an interior of the cabinet from the fan by using a heat exchange unit installed adjacent to the fan.

17. The control method of a charge/discharge device for a secondary battery according to claim 16,
wherein the position detection step is detecting the positions of the tray and the fan along the height direction of the cabinet, and
the position alignment step is moving the fan in the height direction of the cabinet so that the positions of the tray and the fan are aligned along the direction directed from the inlet to the outlet of the fan.

18. The control method of a charge/discharge device for a secondary battery according to claim 16, wherein the temperature adjustment step is:
heating the air flowing into an interior of the cabinet from the fan by using the heat exchange unit, if the temperature measured in the temperature measurement step is lower than a set value, and
cooling the air flowing into an interior of the cabinet from the fan by using the heat exchange unit, if the temperature measured in the temperature measurement step is higher than a set value.
